# EUROPEAN PATENT APPLICATION

(11) **EP 4 317 335 A1**
(43) Date of publication of application: **07.02.2024**
(21) Application number: 22774179.0
(22) Date of filing: 21.03.2022
(51) Int. Cl.: C09D 183/12, C09D 7/62

(54) **THERMALLY CONDUCTIVE PHASE-CHANGE MATERIAL AND APPLICATION THEREOF**

(30) Priority: 25.03.2021 CN 202110320183
(71) Applicant: Jiangxi Bluestar Xinghuo Silicone Co., Ltd., Jiujiang, Jiangxi 330300 (CN)
(72) Inventor: TAN, Kui, Jiujiang, Jiangxi 330300 (CN); LYU, Yuxia, Jiujiang, Jiangxi 330300 (CN); HE, Dandan, Jiujiang, Jiangxi 330300 (CN); WU, Chaobo, Jiujiang, Jiangxi 330300 (CN)
(74) Representative: Garcia Escomel, Cristina
(86) International application number: PCT/CN2022/081967
(87) International publication number: WO 2022/199520

(57) **Abstract**

A thermally conductive phase-change composition, comprising a polyfunctional group modified polysiloxane as a base polymer and a thermally conductive filler, wherein the polyfunctional group modified polysiloxane is a polysiloxane modified by a polyether functional group and a functional group having antioxidant properties. A thermally conductive phase-change product is obtained from the composition.

## Description

### Technical field

The present invention belongs to the field of polymer materials, and in particular relates to thermally conductive phase-change material and application thereof.

### Background art

With the development of science and technology, the level of integration of electronic components is getting higher and higher, and the calorific value per unit volume is getting larger and larger. The problem of heat dissipation has long become the bottleneck of design. Failure to solve the heat dissipation problem will directly shorten the life of electronic equipment, and even affect its normal use. In order to solve the heat dissipation problem of heat-generating electronic components, heat dissipation sheets are usually designed. However, the surfaces of the electronic components and the heat dissipation sheets cannot be absolutely flat, and there are more than 90% air gaps on the contact surfaces, which greatly increases the thermal resistance.

In order to reduce the thermal resistance of the interface, various solutions have been proposed in the prior art, such as the use of metal welding, thermally conductive adhesives, thermally conductive gaskets, thermally conductive silicone grease, thermally conductive phase-change materials, etc. Among them, the solution of using thermally conductive phase-change materials has attracted attention due to its advantages such as low thermal resistance, easy disassembly and assembly, and not easy to dry out.

Thermally conductive phase-change materials are a type of thermally conductive materials with phase-transition ability, and can have phase-transition behavior in a specific temperature range. Usually, they become liquid at the working temperature of electronic components (generally above 30°C) to reduce thermal resistance; they remain solid at non-working temperatures to effectively prevent leakage.

CN102634212B discloses a thermally conductive silicone grease composition, which is mainly composed of carbon nanotubes, graphene, phase-transition capsule particles and silicone oil. The thermally conductive silicone grease composition has high thermal conductivity and low thermal resistance, greatly improves the heat dissipation efficiency and service life of the thermally conductive silicone grease, and has strong practical value. However, this invention only concerns with mechanically mixing capsules with phase-transition ability and silicone oil, which have poor compatibility and are easy to agglomerate locally. And, the composition as a whole does not have phase-transition behavior, and the silicone oil is easy to leak out after alternating cold and heat.

CN109844030A relates to a thermally conductive silicone composition comprising (A) an organopolysiloxane as a base polymer and (B) a thermally conductive filler, wherein the thermally conductive filler is 60-85% by volume in the thermally conductive silicone composition, and 40-60% by volume of the thermally conductive filler is aluminum nitride with an average particle diameter of 50 µm or more.

However, there are in particular one or more of the following problems in the thermally conductive phase-change materials of the prior art:
(i) Poor compatibility between components easily leads to uneven dispersion and increase in local thermal resistance;
(ii) Phase-change materials are easily oxidized at high temperatures, resulting in easy hardening or drying, or even loss of phase-transition function;
(iii) Phase separation easily occurs after multiple cold and hot shocks, and there is a risk of leakage of components, leading to increase in thermal resistance;
(iv) The material is flammable and difficult to store;
(v) It is not suitable for the processing method using screen printing. Screen printing has strict requirements for the material to be coated: 1) The material to be coated must ensure good fluidity during processing; 2) The particle size of fillers contained in the material to be coated must be much smaller than the pore size of the screen; 3) During screen printing, cross-linking due to chemical reactions or crystallization of certain components cannot occur. Therefore, thermally conductive phase-change materials that can be coated by screen printing technology are rare in the market.

### Contents of the invention

The present invention aims to overcome the problems of the prior art.

Therefore, the object of the present invention is to provide a thermally conductive phase-change material with excellent comprehensive performance. In particular, the thermally conductive phase-change material according to the present invention has good component compatibility. The thermally conductive phase-change material according to the present invention also has good oxidation resistance. The thermally conductive phase-change material according to the present invention can maintain good thermal conductivity and phase-transition behavior after undergoing aging experiments and/or long-term cold and hot shock; and no component is separated out after long-term cold and hot shock. The thermally conductive phase-change material according to the present invention is nonflammable and easy to store. The thermally conductive phase-change material according to the present invention is especially suitable for processing by screen printing.

Therefore, according to one aspect of the present invention, there is provided a thermally conductive phase-change composition comprising a polyfunctional group modified polysiloxane as a base polymer and a thermally conductive filler.

Preferably, the thermally conductive phase-change composition is composed of a polyfunctional group modified polysiloxane as a base polymer and a thermally conductive filler.

According to an embodiment, the polyfunctional group modified polysiloxane as a base polymer is a bifunctional group modified polysiloxane, preferably a polysiloxane modified by a polyether functional group and a functional group having antioxidant properties.

As for the polysiloxane, usually its main chain part is essentially constituted of organosiloxane repeating units. As organic groups bonded to silicon atoms in the organopolysiloxane, for example, methyl, ethyl, propyl, 3,3,3-trifluoropropyl, xylyl, tolyl and phenyl groups may be mentioned.

According to a preferred embodiment, the polysiloxane is a linear polydiorganosiloxane, particularly preferably a linear polydimethylsiloxane. According to another preferred embodiment, the polysiloxane is a polymethylhydrosiloxane, preferably a linear polymethylhydrosiloxane.

According to an embodiment, the polyether functional group is selected from polyalkylene oxide functional groups, preferably polyethylene oxide functional group, polypropylene oxide functional group and combinations thereof, said functional group being optionally substituted, for example by alkyl such as methyl, ethyl, propyl, butyl or alkenyl such as vinyl, allyl.

According to a particularly preferred embodiment, the polyether functional group is an allyl polyoxyethylene ether functional group.

According to an embodiment, the functional group having antioxidant properties is selected from hindered phenolic functional groups, hindered amine functional groups or combinations thereof.

The hindered phenol described in the present invention may be selected from methyl β-(3,5-di-tert-butylhydroxyphenyl) propionate, pentaerythritol tetrakis[3-(3,5-di-tert-butyl-4-hydroxyphenyl) propionate], n-octadecyl β-(4-hydroxyphenyl-3,5-di-tert-butyl) propionate, N,N'-1,6-hexylene-bis[3-(3,5-di-tert-butyl-4-hydroxyphenyl)propionamide], N,N'-bis[3-(3,5-di-tert-butyl-4-hydroxyphenyl)propionyl]hydrazine, octadecyl 3-(3,5-di-tert-butyl-4-hydroxy) propionate, 2,6-di-tert-butyl-4-cresol, 2,2'-methylene bis(4-methyl-6-tert-butylphenol), 2,6-di-tert-butyl-4-methylphenol and 4,4'-methylene bis(2,6-di-tert-butylphenol) and combinations thereof.

According to a particularly preferred embodiment, the hindered phenol of the present invention is methyl β-(3,5-di-tert-butylhydroxyphenyl) propionate.

The hindered amine described in the present invention may be selected from diphenylamine, p-phenylenediamine, dihydroquinoline and combinations thereof.

The functional group having antioxidant properties may be located at the side chains and/or both ends of the base polymer.

According to a particularly preferred embodiment, the polyfunctional group modified polysiloxane has the following structure: 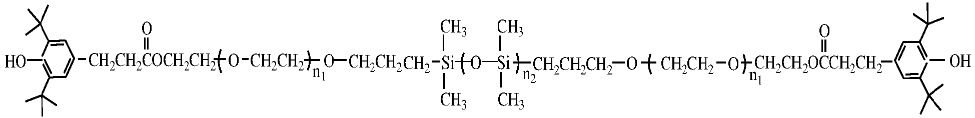 wherein, n₁ is any integer between 10 and 100, preferably between 12 and 60, more preferably between 15 and 50 and most preferably between 18 and 42; n₂ is any integer between 6 and 120, preferably between 6 and 100, more preferably between 8 and 90 and most preferably between 10 and 80.

The phase-transition temperature of the base polymer can be adjusted by changing n₁. The higher the value of n₁ is, the higher the phase-transition temperature will be. For example, the polyfunctional group modified polysiloxane has a phase-transition temperature of 0°C to 80°C, preferably 20°C to 50°C.

The viscosity of the base polymer can be adjusted by changing n₂. The higher the value of n₂ is, the higher the viscosity will be. Preferably, the polyfunctional group modified polysiloxane has a viscosity of 10-2000 mPa.s, preferably 200-1500 mPa.s, measured according to the national standard GB/T 10247-2008 Viscosity Measurement Method Standard, using rotational viscometer, at 50°C.

The thermally conductive filler may be selected from aluminum hydroxide, alumina, zinc oxide, cerium oxide, aluminum nitride, boron nitride, silicon nitride, silicon carbide, graphene, carbon nanotubes, quartz powder, aluminum powder, copper powder, silver powder and mixtures thereof.

According to an embodiment, the particle size (D₅₀) of the thermally conductive filler is 0.1 to 50 µm, preferably 1 to 20 µm, measured using a laser particle size analysis instrument commonly used in the art (such as PIP9.1 particle image processing instrument from OMEC, NKT2010-L dry particle size analyzer from Shandong Niket Analytical Instrument Co., Ltd., etc.).

According to another embodiment, the thermally conductive filler may be used in combination of coarse and fine particle sizes, wherein the median particle size (D₅₀) of the coarser part may range from 5 to 20 µm, and the median particle size (D₅₀) of the finer part may range from 0.1 to 5 µm, wherein the ratio of the coarse and fine parts may range, for example, from 3:7 to 7:3, preferably from 4:6 to 6:4.

Preferably, the shape of the thermally conductive filler is spherical or approximately spherical.

According to a preferred embodiment, the thermally conductive filler is surface treated with a treatment agent, wherein the treatment agent is preferably selected from stearic acid, zinc stearate, calcium stearate, KH550, KH560, KH792, KH602, KH570, dynasylan^{®}1146, hexamethyldisilazane, dodecyltrimethoxysilane, hexadecyltrimethoxysilane, vinyltrimethoxysilane and mixtures thereof.

Optionally, the composition according to the present invention may also contain an additive which can generally be used for thermally conductive phase-change compositions, as long as it does not impair the purpose of the present invention. For example, the additive may be selected from pigments of different colours, reinforcing fillers such as carbon black or silica.

According to an embodiment of the present invention, the thermally conductive phase-change composition comprises 5-30% by weight, preferably 8-20% by weight of a polyfunctional group modified polysiloxane relative to the total weight of the composition.

According to an embodiment of the present invention, the thermally conductive phase-change composition comprises 70-95% by weight, preferably 80-92% by weight of a polyfunctional group modified thermally conductive filler relative to the total weight of the composition.

The inventors of the present invention unexpectedly found that the use of the base polymer as defined in the present invention in the thermally conductive phase-change composition makes it possible to obtain a thermally conductive phase-change material with excellent comprehensive performance. The use of the specific base polymer as defined in the present invention makes it possible in particular to obtain a thermally conductive phase-change material with the following excellent properties: good component compatibility, good oxidation resistance, able to maintain good thermal conductivity and phase-transition behavior after undergoing aging experiments and/or long-term cold and hot shock, no separation-out of component after long-term cold and hot shock, nonflammable, easy to store, and especially suitable for processing by screen printing.

The base polymer of the invention may be prepared by methods known to those skilled in the art. For example, the base polymer is prepared by reacting polyether, polysiloxane, and antioxidant in the presence of a catalyst.

In particular, taking as an example that the polyether is allyl polyoxyethylene ether, the polysiloxane is hydrogen-containing silicone oil and the antioxidant is methyl β-(3,5-di-tert-butyl-4-hydroxyphenyl) propionate, the base polymer is prepared by a method comprising the following steps:
1) adding allyl polyoxyethylene ether into a reaction vessel, raising the temperature to 60 to 90°C, charging nitrogen, stirring mechanically, and adding catalyst A to the reaction vessel after the temperature is constant;
2) adding hydrogen-containing silicone oil into the reaction vessel;
3) reacting the allyl polyoxyethylene ether with the hydrogen-containing silicone oil, and distilling under reduced pressure after the reaction is completed, so as to obtain a polyether silicone oil;
4) adding a certain amount of polyether silicone oil and methyl β-(3,5-di-tert-butyl-4-hydroxyphenyl) propionate into the reaction vessel, charging nitrogen, adding catalyst B, mixing evenly, and reacting under reflux; preferably, the reflux reaction temperature is 120-160°C, and the reaction time is 6-9 h;
5) filtering the solution obtained in step 4) with a filter, and distilling the filtered clear solution under reduced pressure at a temperature of 80-120°C for 2-4 h to obtain the final product.

The catalyst A is preferably a platinum catalyst, more preferably any one selected from chloroplatinic acid, Speir catalyst, Karsted catalyst and solid-phase platinum catalyst.

The catalyst B is preferably a solid catalyst, more preferably an acidic solid catalyst, such as acidic resin, acidic clay, etc.

The reaction vessel is preferably a four-necked flask.

In step 2), the hydrogen-containing silicone oil may be pumped into the reaction vessel with a peristaltic pump; and/or the addition rate of the hydrogen-containing silicone oil may be 0.5 to 20 ml/min.

In step 3), the reaction of the allyl polyoxyethylene ether with the hydrogen-containing silicone oil may be carried out at a temperature of 80 to 100°C for 3-5 h; and/or the distillation under reduced pressure may be carried out at a temperature of 90 to 110°C for 2-4 h.

The hydrogen-containing silicone oil is well known to those skilled in the art. Its use and selection are also within the ability of those skilled in the art. Generally, the hydrogen-containing silicone oil refers to a polysiloxane having a certain number of Si-H bonds, preferably a linear polysiloxane, which is usually liquid at room temperature. The hydrogen-containing silicone oil is preferably a terminal hydrogen-containing silicone oil. Advantageously, the hydrogen-containing silicone oil used according to the present invention has a viscosity at 25°C of 3-400 mm²/s, preferably 6-150 mm²/s, more preferably 7-50 mm²/s, measured according to the national standard GB/T 10247-2008 Viscosity Measurement Method Standard, using capillary viscometer, at 25°C. Also advantageously, the Si-H content of the hydrogen-containing silicone oil used according to the present invention is preferably 0.4%-8.7%, more preferably 0.7%-7.5% and most preferably 1.6%-6.0%, calculated based on the SiH mass ratio.

Preferably, the molar ratio of the allyl polyoxyethylene ether to the hydrogen-containing silicone oil is between 0.8:1 and 1.2:1.

Preferably, the molar ratio of the polyether silicone oil to methyl β-(3,5-di-tert-butyl-4-hydroxyphenyl) propionate is between 0.8:1 and 1.6:1.

Preferably, the mass of the catalyst A is 0.5 to 20 ppm relative to the sum of the mass of the allyl polyoxyethylene ether and the hydrogen-containing silicone oil; and/or the mass of the catalyst B is 1% by weight to 5% by weight relative to the sum of the mass of the polyether silicone oil and methyl β-(3,5-di-tert-butyl-4-hydroxyphenyl) propionate.

The composition according to the present invention may be coated by using screen printing technology. For example, the composition of the present invention may be coated onto the interface of a heat sink by using screen printing technology. The screen printing technology is an application technology which can accurately control the coating thickness, can adjust the coating thickness by controlling the thickness and mesh (pore size) of a screen, and can filter out a part of impurities with larger particles. The coating by using screen printing technology is beneficial to further reducing the thermal resistance between the heat sink and the heating element, and at the same time, saving materials, and effectively preventing the coated redundant materials from overflowing, avoiding contamination of other components and eliminating potential hidden dangers. The composition of the present invention is suitable for coating by using screen printing technology due to the following excellent properties: 1) it has good fluidity during processing; 2) the filler contained therein has a particle size much smaller than the pore size of the screen; 3) during the process of screen printing, cross-linking due to chemical reactions or crystallization of certain components does not occur.

As an example, the composition according to the present invention may be used by a method comprising the following steps:
1) filling the thermally conductive phase-change composition of the present invention into a screen printing device with heating and constant temperature functions;
2) heating it to 35 to 60°C and keeping it at a constant temperature;
3) coating the thermally conductive phase-change composition onto an electronic component that needs heat dissipation, such as CPU, GPU, etc. by using the screen printing device;
4) transferring the coated electronic component by a conveyor belt to a cooling zone, quickly cooling it to below 5°C, and, after the thermally conductive phase-change material is solidified, packaging it together with the electronic component;
5) or alternatively, after the completion of step 3), directly assembling the electronic component coated with the thermally conductive phase-change material with a heat dissipation fin, and then packaging them as a whole.

According to another aspect, the present invention relates to use of a base polymer as defined herein as a thermally conductive phase-change substance. Preferably, the base polymer is used in a thermally conductive phase-change composition.

According to yet another aspect, the present invention relates to a thermally conductive phase-change product obtainable by using the thermally conductive phase-change composition of the present invention. The thermally conductive phase-change product according to the present invention may be prepared by mixing various components in the thermally conductive phase-change composition. Specifically, various components are added into a high-speed stirring tank, heated to 60 to 90°C, stirred at a speed of 300 to 500 r/m for 30 to 60 min under a negative pressure of -0.085 MPa, and then discharged in a molten state, to obtain the thermally conductive phase-change product.

The thermally conductive phase-change product may be in an easy-to-store form, for example in the form of sheet, strip, ring, sphere, or cube, according to the specific application.

Preferably, the thermally conductive phase-change product may be used as a heat dissipation element. The heat dissipation element may, for example, be placed between a heat-generating electronic part and a heat dissipation sheet part.

Preferably, the thermally conductive phase-change product may be coated or placed between a heat-generating electronic part and a heat dissipation sheet part by means of heating screen printing.

### Description of figures

Figure 1 shows the DSC analysis of the thermally conductive phase-change material according to Example 1 of the present invention, whose endothermic-exothermic behavior is studied by using a heating and cooling rate of 5°C/min;
Figure 2 shows the DSC analysis of the thermally conductive phase-change material according to Example 1 of the present invention, whose endothermic-exothermic behavior is studied by using a heating and cooling rate of 2°C/min;
Figure 3 shows the endothermic-exothermic behavior in 30 cycles of the thermally conductive phase-change material according to Example 1 of the present invention studied by using a heating and cooling rate of 10°C/min.
Figure 4 shows the IR spectrum of the polyether silicone oil obtained in step (3) in the process of preparing the base polymer A.
Figure 5 shows the IR spectrum of the obtained base polymer A.

### Mode of carrying out the invention

The present invention will be further described below in conjunction with specific examples:
Raw materials used in the examples are as follows:
(1) Allyl polyoxyethylene ether: chain link number of repeating units of between 18-42;
(2) Hydrogen-containing silicone oil: terminal hydrogen-containing silicone oil, chain link number of repeating units of between 10-80, viscosity of 6-150 mm²/s, measured according to the national standard GB/T 10247-2008 Viscosity Measurement Method Standard, using capillary viscometer, at 25°C; Grade 620V 3-150, Jiangxi Bluestar Xinghuo Silicones Co., Ltd.;
(3) Methyl β-(3,5-di-tert-butyl-4-hydroxyphenyl)propionate: analytically pure;
(4) Catalyst A: Karsted catalyst, platinum content of 3000 ppm;
(5) Catalyst B: acidic resin, particle size of 0.335-1.25 mm, hydrogen form rate ≥ 99.9%, large pore strong acid cation exchange resin with styrene-divinylbenzene copolymer as backbone;
(6) Thermally conductive filler: industrial grade, characterized as in the examples;
(7) Methyl silicone oil: Grade 47V 100-1000, Jiangxi Bluestar Xinghuo Silicones Co., Ltd.;
(8) Antioxidant 1706: from BASF.

### 1. Preparation of base polymer:

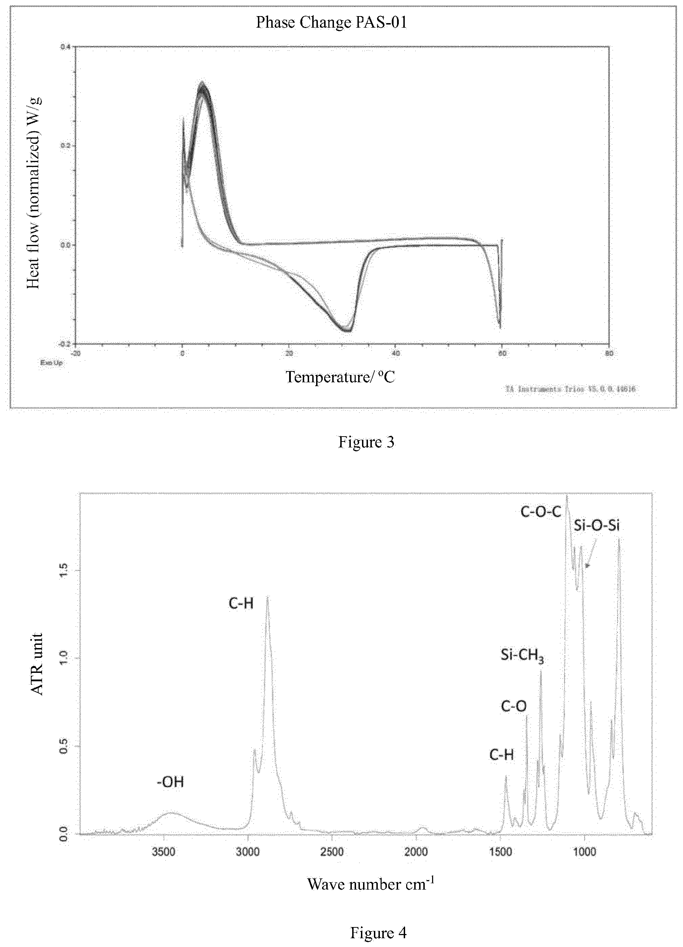

Step 1): 1 mole of allyl polyoxyethylene ether was added into a four-necked flask, the temperature was raised to 90°C, nitrogen was charged, stirring was carried out mechanically, and then catalyst A was added in a total amount of 10 ppm into the four-necked flask after the temperature was constant; the chain link number of the allyl polyoxyethylene ether used determines the value of n₁ in the reaction product, and these two are equal in value, the corresponding relationship being shown in Table 1 below;
Step 2): 1 mole of hydrogen-containing silicone oil was pumped into a four-necked flask with a peristaltic pump at a rate of 1 ml/min; the chain link number of the hydrogen-containing silicone oil used determines the value of n₂ in the reaction product, and these two are equal in value, the corresponding relationship being shown in Table 1 below;
Step 3): the reaction was carried out at 90°C for 5 h. And distillation under reduced pressure was carried out at 95°C for 4 h, to obtain a polyether silicone oil. The IR spectrum of the product contains C-O-C and Si-O-Si absorption peaks, but does not contain C=C and Si-H peaks, indicating that the allyl polyoxyethylene ether and the hydrogen-containing silicone oil have completely reacted. As an example, please refer to the IR spectrum of the polyether silicone oil obtained in this step 3) in the process of preparing the base polymer A, as shown in Figure 4.
Step 4): 1 mole of the polyether silicone oil obtained in step 3) and 2 moles of methyl β-(3,5-di-tert-butyl-4-hydroxyphenyl) propionate were added into a four-necked flask, nitrogen was charged, and then catalyst B was added, followed by mixing evenly, and reacted under reflux at 140°C for 8 h;
Step 5): The solution obtained in step 4) was filtered with a filter, and the filtered clear solution was distilled under reduced pressure at 100°C for 4 h to obtain a final product having the following structure:

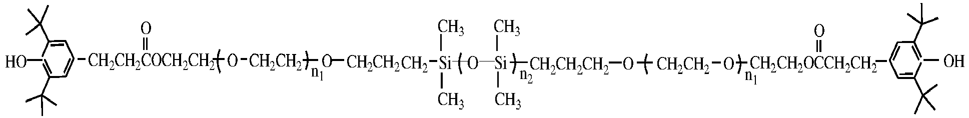

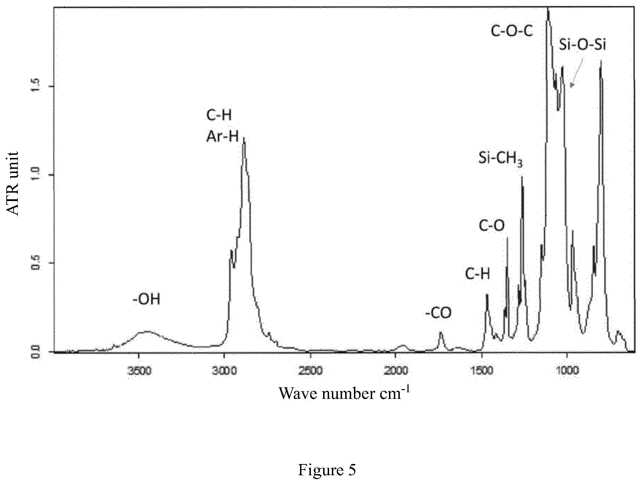

The IR spectrum of the product shows the absorption peaks of C=O and Ar-H, and the product already contains methyl β-(3,5-di-tert-butyl-4-hydroxyphenyl) propionate. As an example, please refer to the IR spectrum of the base polymer A obtained in this step (5), as shown in Figure 5.

**Table 1. Corresponding relationship between the chain link numbers n₁ and n₂ and the product**

| No. | Chain link number of allyl polyoxyethylene ether (value of n₁ ) | Chain link number of hydrogen-containing silicone oil (value of n₂ ) | Name of reaction product |
|---|---|---|---|
| 1 | 18 | 13 | base polymer A |
| 2 | 24 | 80 | base polymer B |
| 3 | 30 | 60 | base polymer C |
| 4 | 36 | 40 | base polymer D |
| 5 | 42 | 10 | base polymer E |

Base polymers A to E as reaction products will be used in the following examples.

### 2. Examples

### Example 1

The thermally conductive phase-change material of this example comprises the following components by weight parts:

| | |
|---|---|
| base polymer A | 20 parts |
| hexamethyldisilazane-treated zinc oxide with a median particle size D₅₀ of 0.5 µm | 40 parts |
| hexamethyldisilazane-treated alumina with a median particle size D₅₀ of 5 µm | 40 parts |

The above components were put into a high-speed stirring tank, heated to 60°C, stirred at a speed of 500 r/m for 30 min under a negative pressure of -0.085 MPa, and discharged in a molten state, to obtain the thermally conductive phase-change material of Example 1.

### Example 2

The thermally conductive phase-change material of this example comprises the following components by weight parts:

| | |
|---|---|
| base polymer B | 15 parts |
| KH550-treated zinc oxide with a median particle size D₅₀ of 1 µm | 65 parts |
| KH550-treated boron nitride with a median particle size D₅₀ of 20 µm | 20 parts |

The above components were put into a high-speed stirring tank, heated to 70°C, stirred at a speed of 400 r/m for 20 min under a negative pressure of -0.085 MPa, and discharged in a molten state, to obtain the thermally conductive phase-change material of Example 2.

### Example 3

The thermally conductive phase-change material of this example comprises the following components by weight parts:

| | |
|---|---|
| base polymer C | 10 parts |
| stearic acid-treated alumina with a median particle size D₅₀ of 1 µm | 40 parts |
| stearic acid-treated alumina with a median particle size D₅₀ of 10 µm | 50 parts |

The above components were put into a high-speed stirring tank, heated to 70°C, stirred at a speed of 500 r/m for 30 min under a negative pressure of -0.085 MPa, and discharged in a molten state, to obtain the thermally conductive phase-change material of Example 3.

### Example 4

The thermally conductive phase-change material of this example comprises the following components by weight parts:

| | |
|---|---|
| base polymer D | 20 parts |
| dodecyltrimethoxysilane-treated cerium oxide with a median particle size D₅₀ of 1 µm | 40 parts |
| dodecyltrimethoxysilane-treated cerium oxide with a median particle size D₅₀ of 8 µm | 40 parts |

The above components were put into a high-speed stirring tank, heated to 70°C, stirred at a speed of 500 r/m for 30 min under a negative pressure of -0.085 MPa, and discharged in a molten state, to obtain the thermally conductive phase-change material of Example 4.

### Example 5

The thermally conductive phase-change material of this example comprises the following components by weight parts:

| | |
|---|---|
| base polymer E | 8 parts |
| hexamethyldisilazane-treated zinc oxide with a median particle size D₅₀ of 0.5 µm | 35 parts |
| copper powder with a median particle size D₅₀ of 2 µm | 30 parts |
| copper powder with a median particle size D₅₀ of 15 µm | 27 parts. |

The above components were put into a high-speed stirring tank, heated to 70°C, stirred at a speed of 400 r/m for 40 min under a negative pressure of -0.085 MPa, and discharged in a molten state, to obtain the thermally conductive phase-change material of Example 5.

### Comparative Example 1

The base polymer in Example 1 was replaced by methyl silicone oil having a viscosity of 350 mPa.s in the same parts by weight, while the rest components remained unchanged from Example 1, and the preparation process remained unchanged.

### Comparative Example 2

The base polymer in Example 2 was replaced by methyl silicone oil having a viscosity of 500 mPa.s in the same parts by weight, while the rest components remained unchanged from Example 2, and the preparation process remained unchanged.

### Comparative Example 3

The base polymer in Example 3 was replaced by methyl silicone oil having a viscosity of 1000 mPa.s in the same parts by weight, while the rest components remained unchanged from Example 3, and the preparation process remained unchanged.

### Comparative Example 4

The base polymer A in Example 1 was replaced by a polyether silicone oil having the following structure obtained from steps 1) to 3) of the preparation process of the base polymer: 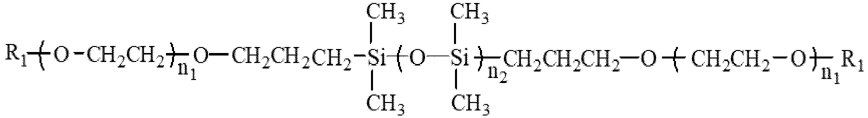
wherein n₁=18, n₂=13; R₁ is -H,
while the rest components remained unchanged from Example 2, and the preparation process remained unchanged.

### Comparative Example 5

The base polymer B in Example 2 was replaced by a polyether silicone oil having the following structure obtained from steps 1) to 3) of the preparation process of the base polymer: 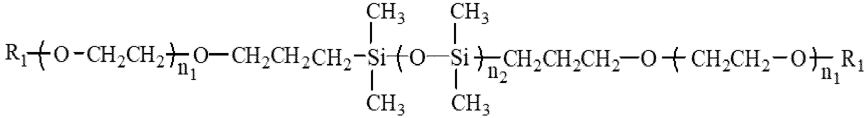
wherein ni=24, n₂=80; R₁ is -H,
while the rest components remained unchanged from Example 2, and the preparation process remained unchanged.

### Comparative Example 6

In the formula of Comparative Example 5, 1 part of Antioxidant 1076 was added, while the rest components remained unchanged, and the preparation process remained unchanged.

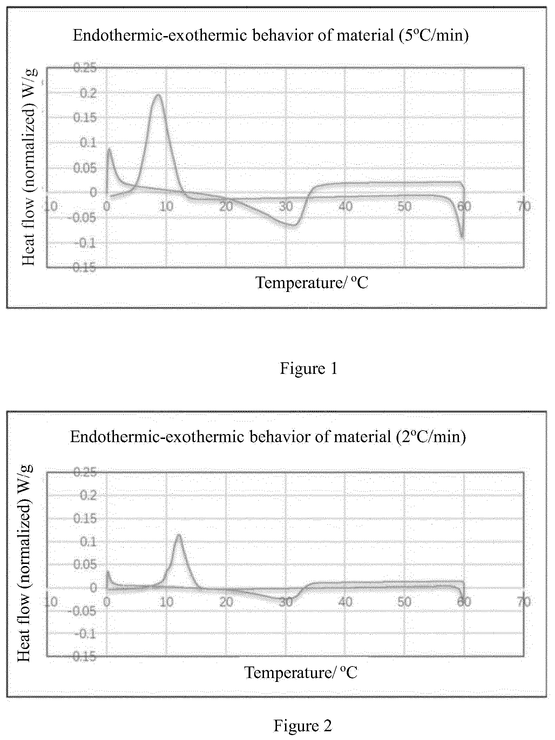

The material of Example 1 was subjected to DSC analysis. Its endothermic-exothermic behaviors were studied by using heating and cooling rates of 5°C/min and 2°C/min respectively (Figure 1 and Figure 2), and its endothermic-exothermic behavior in 30 cycles was studied by using a heating and cooling rate of 10°C/min (Figure 3).

The various properties (Table 1) of the materials of the above Examples and Comparative Examples were tested according to the following standards.
1) Thermal conductivity coefficient, using Hot disk device, sample preparation and testing are carried out according to standard ISO 22007;
2) Melting endothermic peak temperature, measured by DSC at a heating rate of 5°C/min, and metered as the endothermic peak apex;
3) Thermal conductivity coefficient and melting endothermic peak temperature after aging for 1000 h at 85°C, 85%RH (double 85);
4) Thermal conductivity coefficient and melting endothermic peak temperature after 100 times of cold and heat shocks from -40°C to 125°C;
5) Clamping a sample with two pieces of anodic alumina blocks of 50 mm*50 mm*2 mm, and observing whether there is component separation-out after 100 times of cold and heat shocks from -40°C to 125°C;
6) Coating anodic alumina blocks of 50 mm*50 mm*2 mm with the thermally conductive phase-change materials of the above Examples and Comparative Examples respectively by using a screen printing device, and compare the area percentages of the anodic alumina blocks that may be coated with the thermally conductive phase-change materials at different processing temperatures.

**Table 2. Comprehensive performance test of the Examples and the Comparative Examples**

| | Thermal conductivity coefficient W/(m·K) | Endothermic peak temperature °C | Aging for 1000 h at double 85 | | 100 times of cold and heat shock s | | 100 times of cold and heat shocks under the clamping of alumina blocks |
|---|---|---|---|---|---|---|---|
| | | | Thermal conductivity coefficient W/(m·K) | Endothermic peak temperature °C | Thermal conductivity coefficient W/(m·K) | Endothermic peak temperature °C | |
| Example 1 | 0.98 | 32 | 0.95 | 32 | 0.97 | 32 | No component separation-out |
| Example 2 | 1.67 | 35 | 1.70 | 35 | 1.63 | 35 | No component separation-out |
| Example 3 | 2.42 | 39 | 2.39 | 39 | 2.43 | 39 | No component separation-out |
| Example 4 | 0.81 | 41 | 0.76 | 41 | 0.77 | 41 | No component separation-out |
| Example 5 | 3.66 | 45 | 3.56 | 45 | 3.69 | 45 | No component separation-out |
| Comparative Example 1 | 0.93 | / | 0.92 | / | surface drying | | A part of silicone oil separating out and thickening |
| Comparative Example 2 | 1.61 | / | 1.63 | / | surface drying | | A part of silicone oil separating out and drying |
| Comparative Example 3 | 2.39 | / | 2.37 | / | surface drying | | A part of silicone oil separating out and drying |
| Comparative Example 4 | 1.07 | 32 | surface hardening, | | surface hardening, | | hardening |
| | | | losing phase-transition behavior | | losing phase-transition behavior | | |
| Comparative Example 5 | 1.72 | 35 | surface hardening, | | surface hardening, | | hardening |
| | | | losing phase-transition behavior | | losing phase-transition behavior | | |
| Comparative Example 6 | 1.70 | 35 | 1.69 | 35 | local hardening, | | |
| | | | | | losing phase-transition behavior in the hardened part | | |

**Table 3. Comparison of processing performance between Examples and Comparative Examples**

| For comparison, a screen component with a fineness of 80 mesh and a thickness of 0.15 mm is uniformly used | Area percentage (%) of the anodic alumina blocks coated at different temperatures | | |
|---|---|---|---|
| | 35°C | 40°C | 60°C |
| Example 1 | 100 | 100 | 100 |
| Example 2 | 100 | 100 | 100 |
| Example 3 | 0 | 100 | 100 |
| Example 4 | 0 | 0 | 100 |
| Example 5 | 0 | 0 | 100 |
| Comparative Example 1 | 100 | 100 | 100 |
| Comparative Example 2 | 100 | 100 | 100 |
| Comparative Example 3 | 60 | 60 | 65 |
| Comparative Example 4 | 100 | 100 | 100 |
| Comparative Example 5 | 100 | 100 | 100 |
| Comparative Example 6 | 100 | 100 | 100 |

From Figure 1, it can be seen that the sample of Example 1 has a significant endothermic behavior from 20°C to 37°C at a heating rate of 5°C, at this time, the polymer in the system undergoes a transition from solid phase to liquid phase, and the endothermic peak value is about 32°C; in the cooling process at the same rate, the sample has a significant exothermic behavior from 14°C to 4°C, at this time, the polymer in the system undergoes a transition from liquid phase to solid phase, and the exothermic peak value is about 9°C.

When applying the product of the present invention, it is only necessary to raise the temperature of the material above the melting temperature range to achieve screen printing; after the printing is completed, the cooling temperature only needs to be lower than the liquid-solid transition temperature to re-solidify the material, thereby facilitating packaging and transport. The scope of protection of the present invention for the application of screen printing of products includes, but is not limited to, the temperature ranges involved in the Examples.

From Figure 2, it can be seen that the change of the heating and cooling rate makes the phase-transition temperature of the system shift.

From Figure 3, it can be seen that the phase-transition behavior of the sample of Example 1 of the present invention is almost consistent in 30 cycles when tested at the same heating and cooling rate using a DSC device, indicating that the system has good stability.

By comparing the test results (Table 2), it can be seen that the samples of Examples 1 to 5 have good thermal conductivity and phase-transition behavior after high-temperature, high-humidity aging and cold and heat shock tests, and, after cold and heat shock test under the clamping of alumina blocks, no component separation-out occurs, showing good use performance; due to the different polymer structures in Examples 1 to 5, the melting endothermic peaks also change accordingly, indicating that the phase-transition temperature of the system can be adjusted by changing the polymer structure, so as to meet different needs. The present invention includes, but is not limited to, the phase-transition temperatures involved in the Examples.

Regarding Comparative Examples 1 to 3, since no base polymer having phase-transition ability is used, the samples do not show phase-transition behavior; after cold and heat shock test under the clamping of alumina blocks, their use performances are affected due to thickening or drying of the systems caused by separation-out of a part of silicone oil.

Regarding Comparative Examples 4 to 5, under the same conditions as the Examples of the present invention, since the base polymer lacks antioxidant groups, the materials are easily oxidized in environmental tests of high-temperature, high-humidity and cold and heat shocks, resulting in hardening and loss of phase-transition behavior, so that they cannot be used normally.

Regarding Comparative Example 6, even though having better high-temperature and high-humidity resistance than that of Comparative Examples 4 and 5 due to the addition of an additional antioxidant component, its sample shows local hardening after experiencing multiple cold and heat shocks, and the hardened part loses phase-transition behavior.

Through the comparison results of processing performance (Table 3), it can be seen that the samples of Examples 1 to 5 can perform good screen printing when they are heated to above the phase-transition temperature.

Regarding the samples of Comparative Examples 1 and 2, due to their low viscosity, they can also meet the application of screen printing. However, for having no phase-transition behavior, they cannot be solidified after screen printing even if the temperature is lowered, so there is a risk of being touched and partially wiped off during packaging and transport. However, the samples of Examples 1 to 5, after solidification, will not be wiped off even if slightly touched.

Regarding the sample of Comparative Example 3, for having too high viscosity, it cannot achieve the best screen printing effect, and no obvious improvement can be found by increasing the processing temperature.

Regarding the samples of Comparative Examples 4, 5 and 6, they differ only in that the base polymers lack antioxidant groups compared with Examples 1 and 2, which causes little influence on other properties, so there is no obvious influence on the screen printing effect.

## Claims

1. A thermally conductive phase-change composition comprising a polyfunctional group modified polysiloxane as a base polymer and a thermally conductive filler, wherein the polyfunctional group modified polysiloxane is a polysiloxane modified by a polyether functional group and a functional group having antioxidant properties.

2. The thermally conductive phase-change composition according to claim 1, wherein the polyether functional group is selected from polyalkylene oxide functional groups, preferably polyethylene oxide functional group, polypropylene oxide functional group and combinations thereof, the functional group being optionally substituted, for example by alkyl such as methyl, ethyl, propyl, butyl or alkenyl such as vinyl and allyl; more preferably, the polyether functional group is an allyl polyoxyethylene ether functional group.

3. The thermally conductive phase-change composition according to any one of claims 1 to 2, wherein the functional group having antioxidant properties is selected from hindered phenolic functional groups, hindered amine functional groups or combinations thereof; wherein the hindered phenol is preferably selected from methyl β-(3,5-di-tert-butylhydroxyphenyl) propionate, pentaerythritol tetrakis[3-(3,5-di-tert-butyl-4-hydroxyphenyl) propionate], n-octadecyl β-(4-hydroxyphenyl-3,5-di-tert-butyl) propionate, N,N'-1,6-hexylene-bis[3-(3,5-di-tert-butyl-4-hydroxyphenyl)propionamide], N,N'-bis[3-(3,5-di-tert-butyl-4-hydroxyphenyl)propionyl]hydrazine, octadecyl 3-(3,5-di-tert-butyl-4-hydroxy) propionate, 2,6-di-tert-butyl-4-cresol, 2,2'-methylene bis(4-methyl-6-tert-butylphenol), 2,6-di-tert-butyl-4-methylphenol and 4,4'-methylene bis(2,6-di-tert-butylphenol) and combinations thereof, and most preferably selected from methyl β-(3,5-di-tert-butylhydroxyphenyl) propionate; and/or the hindered amine is preferably selected from diphenylamine, p-phenylenediamine, dihydroquinoline and combinations thereof.

4. The thermally conductive phase-change composition according to any one of claims 1 to 3, wherein the polysiloxane is a linear polydiorganosiloxane, preferably a linear polydimethylsiloxane.

5. The thermally conductive phase-change composition according to any one of claims 1 to 4, wherein the polyfunctional group modified polysiloxane has the following structure: 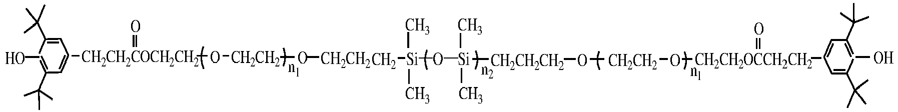 wherein, n₁ is any integer between 10 and 100, preferably between 12 and 60, more preferably between 15 and 50 and most preferably between 18 and 42; n₂ is any integer between 6 and 120, preferably between 6 and 100, more preferably between 8 and 90 and most preferably between 10 and 80.

6. The thermally conductive phase-change composition according to any one of claims 1 to 5, wherein the thermally conductive filler is selected from aluminum hydroxide, alumina, zinc oxide, cerium oxide, aluminum nitride, boron nitride, silicon nitride, silicon carbide, graphene, carbon nanotubes, quartz powder, aluminum powder, copper powder, silver powder and mixtures thereof.

7. The thermally conductive phase-change composition according to claim 6, wherein the thermally conductive filler is surface treated with a treatment agent, wherein the treatment agent is preferably selected from stearic acid, zinc stearate, calcium stearate, KH550, KH560, KH792, KH602, KH570, dynasylan^{®}1146, hexamethyldisilazane, dodecyltrimethoxysilane, hexadecyltrimethoxysilane, vinyltrimethoxysilane and mixtures thereof.

8. The thermally conductive phase-change composition according to any one of claims 1 to 7, wherein the thermally conductive phase-change composition comprises 5-30% by weight, preferably 8-20% by weight of the polyfunctional group modified polysiloxane relative to the total weight of the composition, and/or the thermally conductive phase-change composition comprises 70-95% by weight, preferably 80-92% by weight of the polyfunctional group modified thermally conductive filler relative to the total weight of the composition.

9. A thermally conductive phase-change product obtained by using the thermally conductive phase-change composition according to any one of claims 1 to 8, which is preferably in an easy-to-store form, for example in the form of sheet, strip, ring, sphere, or cube.

10. The thermally conductive phase-change product according to claim 9, which is a heat dissipation element.

11. Use of the base polymer defined in any one of claims 1 to 8 as a thermally conductive phase-change substance.
